# EUROPEAN PATENT SPECIFICATION

(11) **EP 1 663 431 B1**
(45) Date of publication and mention of the grant of the patent: **21.11.2007**
(21) Application number: 03816584.1
(22) Date of filing: 25.09.2003
(51) Int. Cl.: A63H 33/04, G09B 1/38, G09B 23/04, G09B 23/26

(54) **ACCESSORY FOR MAGNETIC CONSTRUCTION GAMES**
ZUBEHÖR FÜR MAGNETISCHE KONSTRUKTIONSSPIELE
ACCESSOIRE POUR JEU DE CONSTRUCTION MAGNETIQUE

(30) Priority: 07.04.2003 IT IM20030001; 07.04.2003 IT IM20030002; 07.04.2003 IT IM20030004; 15.04.2003 IT IM20030008; 15.04.2003 IT IM20030009
(43) Date of publication of application: 07.06.2006
(73) Proprietor: Barone, Natale, 98000 Monaco (MC)
(72) Inventor: Barone, Natale, 98000 Monaco (MC)
(74) Representative: Pizzoli, Antonio
(86) International application number: PCT/IB2003/004204
(87) International publication number: WO 2004/089494

(56) References cited:
- WO-A-02/076565
- DE-U- 29 718 665
- GB-A- 1 225 261
- GB-A- 1 359 625

## Description

The present invention relates to an accessory for magnetic construction games, and in particular to an accessory which allows the mutual movement of one or more member groups of a magnetic construction game.

WO 99/60583 discloses a magnetic construction game comprising a plurality of magnetic bars suitable for being mutually joined by means of ferromagnetic spheres so as to make up a complex structure.

WO 02/055168 and WO 02/076565 disclose instead some accessories for said magnetic game, which serve for reinforcing the joining between the magnetic bars and the ferromagnetic spheres. GB 1225261 discloses a magnetic toy in which a magnetic bar is secured in an axial hole made in a non-magnetic sphere.

However, the structure made up of the magnetic bars, the ferromagnetic spheres and the relevant accessories is substantially static, i.e. does not allow a smooth mutual movement of the members, so that the user's fun is limited with respect to other construction games of the dynamic kind.

It is therefore an object of the present invention to provide an accessory which overcomes said disadvantage, i.e. an accessory which allows the mutual movement of one or more member groups of a magnetic construction game of the above mentioned kind. Said object is achieved with an accessory, the main features of which are disclosed in the first claim, while other features are disclosed in the subsequent claims.

Thanks to the connecting bars and/or to the ferromagnetic members having a substantially hemispherical and/or spherical shape, the accessory according to the present invention can be inserted into a complex structure of the magnetic game for allowing the mutual movement of some parts thereof, so that this structure is not static but dynamic.

Furthermore, thanks to the particular shape and/or size of said connecting bars and/or ferromagnetic members, the accessory according to the present invention can be added to a known magnetic game without any modification of the existing members nor aesthetic or modularity problems.

According to a particular aspect of the invention, the ferromagnetic members can be provided with seats for the ends of the magnetic bars of the known magnetic game, so as to reinforce the resulting structure.

According to another particular aspect of the invention, the connecting bars can be provided with magnetic members, so that the accessory can be directly applied to the ferromagnetic spheres of the known magnetic game.

Further advantages and features of the accessory according to the present invention will become clear to those skilled in the art from the detailed and non-limiting description of some embodiments thereof with reference to the attached drawings, wherein:
- figure 1 shows a side view of a first embodiment of the accessory according to the present invention;
- figure 2 shows a front view of the accessory of figure 1;
- figure 3 shows a view cross-sectioned along plane III-III of the accessory of figure 1;
- figure 4 shows a side view of the accessory of figure 1 during the use;
- figure 5 shows a side view of a second embodiment of the accessory according to the present invention;
- figure 6 shows a front view of the accessory of figure 5;
- figure 7 shows a side view of a third embodiment of the accessory according to the present invention;
- figure 8 shows a side view of a fourth embodiment of the accessory according to the present invention;
- figure 9 shows a cross-sectioned view along plane IX-IX of the accessory of figure 8;
- figure 10 shows a side view of the accessory of figure 8 during the use;
- figure 11 shows a side view of a fifth embodiment of the accessory according to the present invention during the use;
- figure 12 shows a side view of a sixth embodiment of the accessory according to the present invention during the use;
- figure 13 shows a side view of a seventh embodiment of the accessory according to the present invention during the use;
- figure 14 shows a side view of a eighth embodiment of the accessory according to the present invention during the use;
- figure 15 shows a side view of a ninth embodiment of the accessory according to the present invention during the use;
- figure 16 shows a side view of a tenth embodiment of the accessory according to the present invention;
- figure 17 shows a cross-sectioned view along plane XVII-XVII of the accessory of figure 16; and
- figure 18 shows a side view of the accessory of figure 16 during the use.

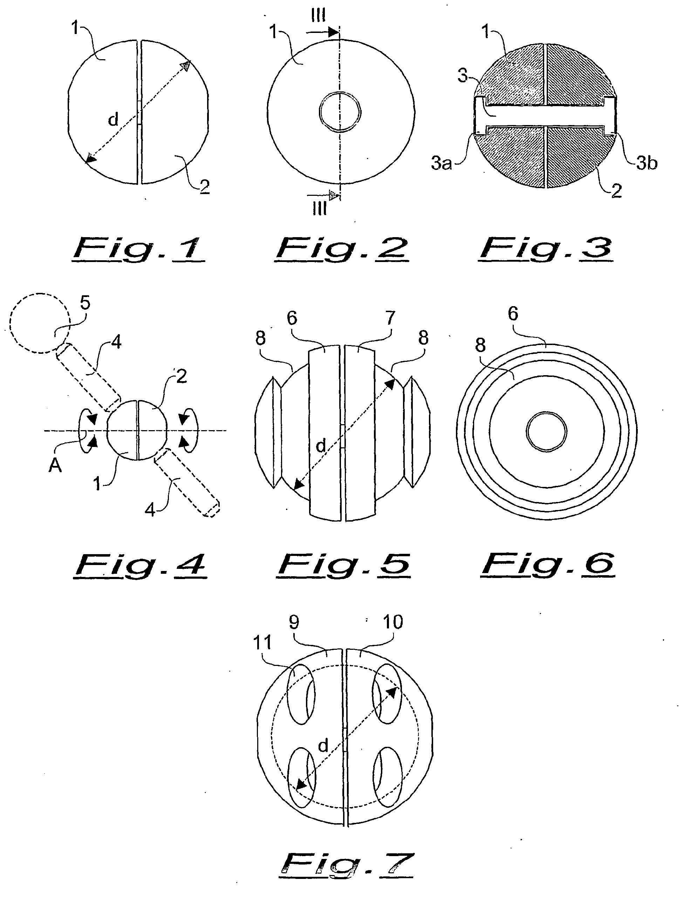

Referring to figures 1 to 4, it is seen that the accessory according to the first embodiment of the invention comprises two ferromagnetic members 1, 2 having a substantially hemispherical shape in which an axial hole, i.e. perpendicular to the center of their circular plane surfaces, is made. A pin 3 is inserted into said axial holes so that the ferromagnetic members 1, 2 can rotate in an independent manner in the direction indicated by the arrows in figure 3 around the longitudinal axis A of pin 3 with the plane circular surfaces arranged side by side. For avoiding the longitudinal sliding of the ferromagnetic members 1, 2 in the axial holes, pin 3 is provided with circular protrusions 3a, 3b arranged in corresponding seats made in the axial holes of the ferromagnetic members 1, 2 close to the curved surfaces. Pin 3 is made of steel or brass, while the ferromagnetic members 1, 2 are made of steel, with a high percentage of ferrite. Known magnetic bars 4 can thus be applied to any point of the hemispherical surface of the ferromagnetic members 1, 2, so as to allow the mutual rotation of said bars around axis A. Preferably, the outer diameter d of the ferromagnetic members 1, 2 is substantially equal to the diameter, in particular comprised between 12 and 13 mm, of the known ferromagnetic spheres 5, which can be in turn applied to the free ends of bars 4.

Referring to figures 5 and 6, it is seen that the accessory according to the second embodiment of the invention comprises, as in the first embodiment, two ferromagnetic members 6, 7 having a substantially hemispherical shape which can rotate in an independent manner around the longitudinal axis of a pin inserted into corresponding axial holes. However, the curved surface of the ferromagnetic members 6, 7 is provided with a circular groove 8, preferably perpendicular to the rotation axis, so that an end of one or more known magnetic bars can be firmly inserted into this groove. The throat of groove 8 lies on a spherical surface having a diameter d substantially equal to the diameter of the known ferromagnetic spheres.

Referring to figure 7, it is seen that the accessory according to the third embodiment of the invention comprises, as in the previous embodiments, two ferromagnetic members 9, 10 having a substantially hemispherical shape which can rotate in an independent manner around the longitudinal axis of a pin inserted into corresponding axial holes. However, the curved surface of the ferromagnetic members 9, 10 is provided with one or more circular holes 11, so that an end of one or more known magnetic bars can be firmly inserted in these holes. The bottom of holes 11 lies on a spherical surface having a diameter d substantially equal to the diameter of the known ferromagnetic spheres.

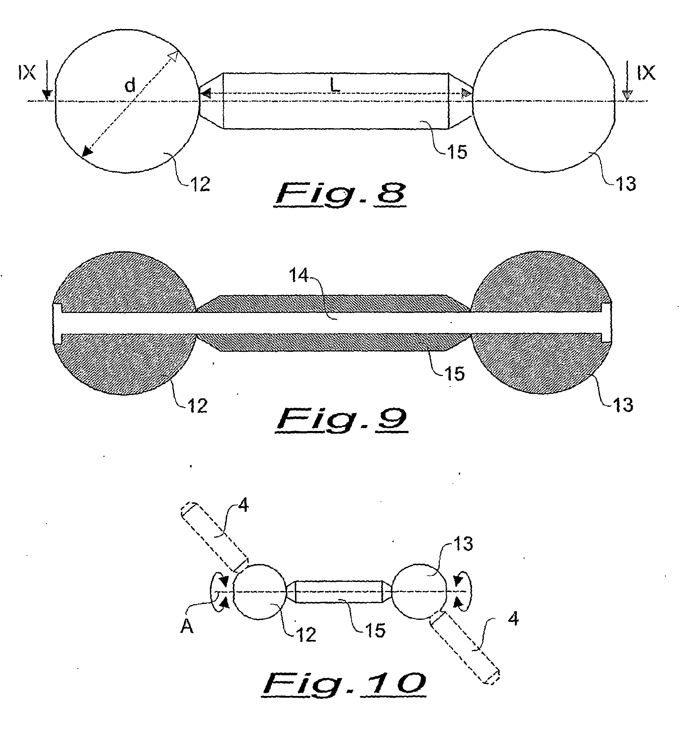

Referring to figures 8 to 10, it is seen that the accessory according to the fourth embodiment of the invention comprises two ferromagnetic members 12, 13 having a substantially spherical shape which can rotate in an independent manner around the longitudinal axis A of a pin 14 inserted into corresponding axial holes, i.e. passing through the center of the ferromagnetic members 12, 13. Further, said pin 14 passes into an axial hole of a bar 15 arranged between the ferromagnetic members 12, 13, so that the latter, together with one or more known magnetic bars 4, can rotate with respect to bar 15. Diameter d of the ferromagnetic members 12, 13 is substantially equal to the diameter of the known ferromagnetic spheres, while the length L of bar 15 is substantially equal to the length of the known magnetic bars 4, in particular comprised between 14 and 16 mm or between 25 and 27 mm.

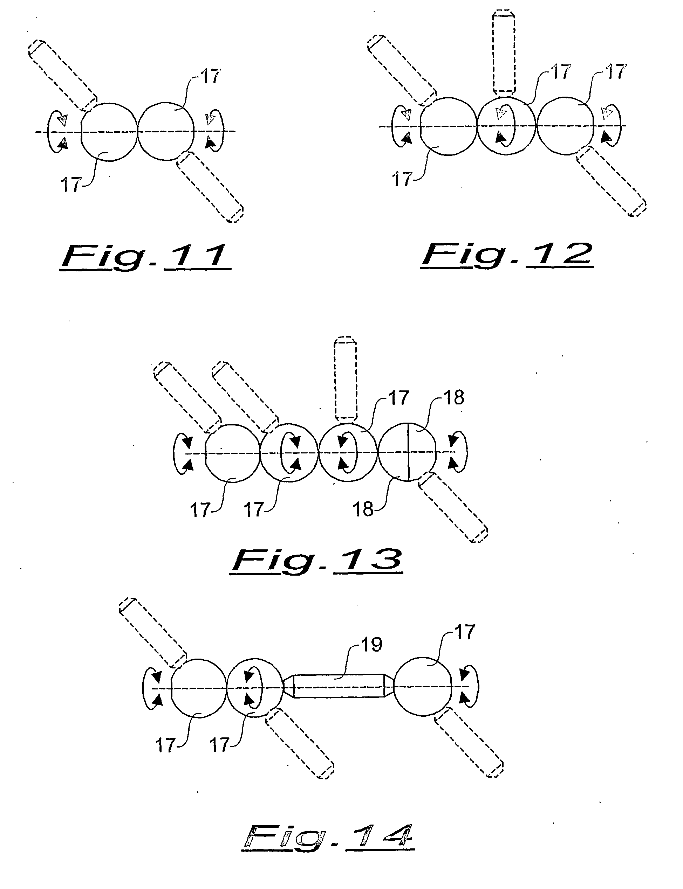

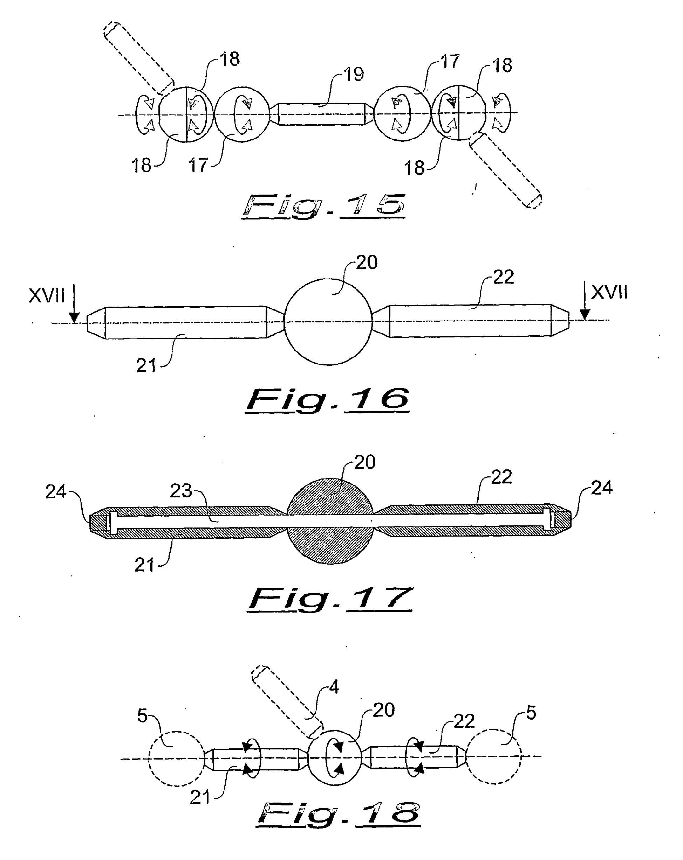

Referring to figures 11 to 15, it is seen that the accessory according to further embodiments of the invention can comprise different combinations of connecting bars and/or ferromagnetic members having a substantially hemispherical and/or spherical shape, which are arranged side by side and are provided with mutually aligned axial holes, in which at least one pin is arranged for allowing their independent rotation around its longitudinal axis. The ferromagnetic members can also be provided with seats, for example as those of the second or third embodiment, for the ends of the magnetic bars. As non-limiting examples, figures 11 and 12 show two accessories comprising two and three spherical ferromagnetic members 17, respectively, which are mutually pivoted, figure 13 shows an accessory comprising three spherical ferromagnetic members 17 and two hemispherical members 18, which are mutually pivoted, figure 14 shows an accessory comprising three spherical ferromagnetic members 17 and a bar 19, which are mutually pivoted, and finally figure 15 shows an accessory comprising two spherical ferromagnetic members 17, four hemispherical members 18 and a bar 19, which are mutually pivoted.

Referring to figures 16 to 18, it is seen that the accessory according to the tenth embodiment of the invention comprises a ferromagnetic member 20 having a substantially spherical shape, which is arranged in a rotating manner between two mutually aligned bars 21, 22, so as to rotate, for example with one or more magnetic bars 4, in an independent manner around a pin 23 inserted into corresponding aligned axial holes made in the ferromagnetic member 20 and in the bars 21, 22. The free end of bars 21, 22 can be provided with a magnetic member 24 suitable for attracting a ferromagnetic member, for example a ferromagnetic sphere 5.

Further variations and/or additions may be made by those skilled in the art to the embodiments hereinabove described and illustrated, while remaining within the scope of the following claims. In particular, the number of the ferromagnetic members having a substantially spherical or hemispherical shape, as well as the relevant connecting bars, may vary according to the kind of connection desired in the resulting structure.

## Claims

1. Accessory for magnetic construction games which comprise one or more magnetic bars (4) suitable for being mutually joined though ferromagnetic spheres (5) so as to made up a complex structure, **said accessory** comprising connecting bars (15; 19; 21, 22) and/or ferromagnetic members having a substantially hemispherical (1, 2; 6, 7; 9, 10; 18) and/or spherical (12, 13; 17; 20) shape which are provided with at least one axial hole and are mutually pivoted for rotating in an independent manner around a longitudinal axis (A) by means of at least one pin (3; 14; 23) arranged in this axial hole, **characterized in that** said pin (3; 14; 23) is provided with axial locking means (3a, 3b) for preventing its longitudinal sliding in this hole.

2. Accessory according to the previous claim, **characterized in that** the pin (3; 14; 23) is provided with circular protrusions (3a, 3b) arranged in corresponding seats made in a plurality of said axial holes.

3. Accessory according to one of the previous claims, **characterized by** comprising at least two ferromagnetic members (1, 2; 6, 7; 9, 10; 18) having a substantially hemispherical shape with the circular plane surfaces arranged side by side,

4. Accessory according to one of the previous claims, **characterized in that** the outer diameter (d) of the ferromagnetic members having a substantially hemispherical (1, 2; 18) and/or spherical (12, 13; 17; 20) shape is substantially equal to the diameter of said ferromagnetic spheres (5).

5. Accessory according to one of the previous claims, **characterized in that** one or more ferromagnetic members having a substantially hemispherical (6, 7; 9, 10) and/or spherical shape are provided with seats (8; 11) for an end of said magnetic bars (4).

6. Accessory according to claim 5, **characterized in that** said seats (8; 11) comprise a circular groove (8) having a throat which lies on a spherical surface having a diameter (d) substantially equal to the diameter of said ferromagnetic spheres (5).

7. Accessory according to claim 5 or 6, **characterized in that** said seats (8; 11) comprise a circular hole (11) having a bottom which lies on a spherical surface having a diameter (d) substantially equal to the diameter of said ferromagnetic spheres (5).

8. Accessory according to one of claims 4, 6 or 7, **characterized in that** said diameter (d) is comprised between 12 and 13 mm.

9. Accessory according to one of the previous claims, **characterized in that** the length (L) of at least one connecting bar (15; 19; 21, 22) is substantially equal to the length of said magnetic bars (4).

10. Accessory according to claim 9, **characterized in that** said length (L) is comprised between 14 and 16 mm or between 25 and 27 mm.

11. Accessory according to one of the previous claims, **characterized in that** a free end of at least one connection bar (21, 22) is provided with a magnetic member (24).

## Patentansprüche

1. Zubehör für magnetische Konstruktionsspielzeuge, die einen oder mehrere Magnetstäbe (4) umfassen, die dazu geeignet sind, miteinander durch ferromagnetische Kugeln (5) so verbunden zu werden, dass sich eine komplexe Struktur ergibt, wobei das Zubehör Verbindungsstangen (15; 19; 21, 22) und/oder ferromagnetische Elemente mit einer im Wesentlichen hemisphärischen (1, 2; 6, 7; 9, 10; 18) und/oder sphärischen (12, 13; 17; 20) Gestalt aufweist, welche mit zumindest einem axialen Loch versehen sind und zueinander drehbar gelagert sind, um auf unabhängige Weise um eine Längsachse (A) mittels zumindest eines in diesem axialen Loch angeordneten Zapfens (3; 14; 23) zu rotieren, **dadurch gekennzeichnet, dass** der Zapfen (3; 14; 23) mit axialen Sicherungsmitteln (3a, 3b) versehen ist, um dessen Gleiten in der Längsrichtung in diesem Loch zu verhindern.

2. Zubehör nach dem vorhergehenden Anspruch, **dadurch gekennzeichnet, dass** der Zapfen (3; 14; 23) mit kreisförmigen Vorsprüngen (3a, 3b) versehen ist, die in entsprechenden, in einer Vielzahl von den axialen Löchern gefertigten Sitzen angeordnet sind.

3. Zubehör nach einem der vorhergehenden Ansprüche, **dadurch gekennzeichnet, dass** es zumindest zwei ferromagnetische Elemente (1, 2; 6, 7; 9, 10; 18) mit einer im Wesentlichen hemisphärischen Gestalt mit seitlich nebeneinander angeordneten kreisförmigen ebenen Flächen umfasst.

4. Zubehör nach einem der vorhergehenden Ansprüche, **dadurch gekennzeichnet, dass** der äußere Durchmesser (d) der ferromagnetischen Elemente mit einer im Wesentlichen hemisphärischen (1, 2; 18) und/oder sphärischen (12, 13; 17; 20) Gestalt im Wesentlichen gleich dem Durchmesser der ferromagnetischen Kugeln (5) ist.

5. Zubehör nach einem der vorhergehenden Ansprüche, **dadurch gekennzeichnet, dass** ein oder mehrere ferromagnetische Elemente mit einer im Wesentlichen hemisphärischen (6, 7; 9, 10) und/oder sphärischen Gestalt mit Sitzen (8; 11) für ein Ende der Magnetstäbe (4) versehen sind.

6. Zubehör nach Anspruch 5, **dadurch gekennzeichnet, dass** die Sitze (8; 11) eine kreisförmige Nut (8) mit einer Kehle umfassen, welche auf einer sphärischen Fläche mit einem Durchmesser (d) liegt, der im Wesentlichen gleich dem Durchmesser der ferromagnetischen Kugeln (5) ist.

7. Zubehör nach Anspruch 5 oder 6, **dadurch gekennzeichnet, dass** die Sitze (8; 11) ein kreisförmiges Loch (11) mit einem Boden umfassen, welcher auf einer sphärischen Fläche mit einer Durchmesser (d) liegt, der im Wesentlichen gleich dem Durchmesser der ferromagnetischen Kugeln (5) ist.

8. Zubehör nach einem der Ansprüche 4, 6 oder 7, **dadurch gekennzeichnet, dass** der Durchmesser (d) zwischen 12 und 13 mm beträgt.

9. Zubehör nach einem der vorhergehenden Ansprüche, **dadurch gekennzeichnet, dass** die Länge (L) zumindest einer Verbindungsstange (15; 19; 21, 22) im Wesentlichen gleich der Länge der Magnetstäbe (4) ist.

10. Zubehör nach Anspruch 9, **dadurch gekennzeichnet, dass** die Länge (L) zwischen 14 und 16 mm oder zwischen 25 und 27 mm beträgt.

11. Zubehör nach einem der vorhergehenden Ansprüche, **dadurch gekennzeichnet, dass** ein freies Ende zumindest einer Verbindungsstange (21, 22) mit einem magnetischen Element (24) versehen ist.

## Revendications

1. Accessoire pour des jeux de construction magnétiques, comportant une ou plusieurs barres magnétiques (4) adaptées pour être reliées mutuellement à travers des sphères ferromagnétiques (5) de manière à constituer une structure complexe, ledit accessoire comportant des barres de liaison (15 ; 19 ; 21, 22) et/ou des éléments ferromagnétiques ayant une forme sensiblement hémisphérique (1, 2 ; 6, 7 ; 9, 10 ; 18) et/ou sphérique (12, 13 ; 17 ; 20) qui sont munis d'au moins un trou axial et pivotés mutuellement pour tourner d'une manière indépendante autour d'un axe longitudinal (A) par l'intermédiaire d'au moins une broche (3 ; 14 ; 23) agencée dans ce trou axial, **caractérisé en ce que** ladite broche (3 ; 14 ; 23) est munie de moyens de verrouillage axiaux (3a, 3b) pour empêcher son déplacement longitudinal dans ce trou.

2. Accessoire selon la revendication 1, **caractérisé en ce que** la broche (3 ; 14 ; 23) est munie de saillies circulaires (3a, 3b) agencées dans des sièges correspondants réalisés dans une pluralité desdits trous axiaux.

3. Accessoire selon l'une quelconque des revendications précédentes, **caractérisé en ce qu'**il comporte au moins deux éléments ferromagnétiques (1, 2 ; 6, 7 ; 9, 10 ; 18) ayant une forme sensiblement hémisphérique, les surfaces planes circulaires étant agencées côte à côte.

4. Accessoire selon l'une quelconque des revendications précédentes, **caractérisé en ce que** le diamètre (d) des éléments ferromagnétiques ayant une forme sensiblement hémisphérique (1, 2 ; 18) et/ou sphérique (12, 13 ; 17 ; 20) est sensiblement égal au diamètre desdites sphères ferromagnétiques (5).

5. Accessoire selon l'une quelconque des revendications précédentes, **caractérisé en ce qu'**un ou plusieurs éléments ferromagnétiques ayant une forme sensiblement hémisphérique (6, 7 ; 9, 10) et/ou sphérique sont munis de sièges (8 ; 11) pour une extrémité desdites barres magnétiques (4).

6. Accessoire selon la revendication 5, **caractérisé en ce que** lesdits sièges (8 ; 11) comportent une rainure circulaire (8) ayant une gorge qui s'étend sur une surface sphérique ayant un diamètre (d) sensiblement égal au diamètre desdites sphères ferromagnétiques (5).

7. Accessoire selon la revendication 5 ou 6, **caractérisé en ce que** lesdits sièges (8 ; 11) comportent un trou circulaire (11) ayant un fond qui s'étend sur une surface sphérique ayant un diamètre (d) sensiblement égal au diamètre desdites sphères ferromagnétiques (5).

8. Accessoire selon la revendication 4, 6 ou 7, **caractérisé en ce que** ledit diamètre (d) est compris entre 12 et 13 mm.

9. Accessoire selon l'une quelconque des revendications précédentes, **caractérisé en ce que** la longueur (L) d'au moins une barre de liaison (15 ; 19 ; 21, 22) est sensiblement égale à la longueur desdites barres magnétiques.

10. Accessoire selon la revendication 9, **caractérisé en ce que** ladite longueur (L) est comprise entre 14 et 16 mm, ou entre 25 et 27 mm.

11. Accessoire selon l'une quelconque des revendications précédentes, **caractérisé en ce qu'**une extrémité libre d'au moins une barre de liaison (21, 22) est munie d'un élément magnétique.
